Europäisches Patentamt

European Patent Office

Office européen des brevets

(19)

(11) **EP 0 544 735 B1**

(12) **EUROPÄISCHE PATENTSCHRIFT**

(45) Veröffentlichungstag und Bekanntmachung des
Hinweises auf die Patenterteilung:
**13.03.1996 Patentblatt 1996/11**

(21) Anmeldenummer: **91914837.9**

(22) Anmeldetag: **16.08.1991**

(51) Int Cl.6: **H04N 7/30**

(86) Internationale Anmeldenummer:
**PCT/EP91/01558**

(87) Internationale Veröffentlichungsnummer:
**WO 92/03889 (05.03.1992 Gazette 1992/06)**

(54) **VERFAHREN UND VORRICHTUNG ZUR BILDDATEN-TRANSFORMATION**

PROCESS AND DEVICE FOR TRANSFORMATION OF IMAGE DATA

PROCEDE ET DISPOSITIF DE TRANSFORMATION DE DONNEES VIDEO

(84) Benannte Vertragsstaaten:
**DE ES FR GB IT**

(30) Priorität: **22.08.1990 DE 4026523**

(43) Veröffentlichungstag der Anmeldung:
**09.06.1993 Patentblatt 1993/23**

(73) Patentinhaber: **DEUTSCHE THOMSON-BRANDT
GMBH
D-78048 Villingen-Schwenningen (DE)**

(72) Erfinder:
• **KEESEN, Heinz-Werner
D-3000 Hannover 1 (DE)**
• **PETERS, Edgar
D-3003 Ronnenberg 3 (DE)**

(74) Vertreter: **Hartnack, Wolfgang, Dipl.-Ing.
Deutsche Thomson-Brandt GmbH
Patentabteilung
Göttinger Chaussee 76
D-30453 Hannover (DE)**

(56) Entgegenhaltungen:
EP-A- 0 282 135    US-A- 3 940 554
US-A- 4 807 053    US-A- 4 814 871

• PHILIPS JOURNAL OF RESEARCH, Band 44,
Nr. 2/3, 28 Juli 1989, EINDHOVEN NL, Seiten 345
- 364; P.H.N. DE WITH: 'Motion-Adaptive
Intraframe Transorm Coding of Video-Signals'
• PROCEEDINGS OF EUSIPCO-88 FOURTH
EUROPEAN SIGNAL PROCESSING
CONFERENCE; EDITED BY NORTH HOLLAND
AMSTERDAM GRENOBLE, FR, SEPTEMBER
5-8, 1988, BD3; Seiten 1513-1516; B. MACQ ET
AL: 'Universal Coding of Transform
Coefficients for Video Codecs' siehe Seite 1515

**Beschreibung**

Die Erfindung betrifft ein Verfahren und eine Vorrichtung zur Bilddaten-Transformation.

Stand der Technik

in vielen Gebieten der Bilddaten-Verarbeitung ist eine datenreduzierende Codierung erforderliche, z.B. für digitale Videorecorder. Ein übliches Verfahren besteht darin, zunächst Blöcke von z.B. 8*8 Bildpunkten zu transformieren, z.B. mit einer DCT (discrete cosine transformation, diskrete Cosinus-Transformation). Ein solches Verfahren ist beispielsweise in dem Artikel "Scene Adaptive Coder", W.H. Chen und W.K. Pratt, IEEE Transactions on Communications, Vol.COM32, No.3, März 1984, beschrieben. Eine Datenreduktion wird dadurch ermöglicht, daß die Bildpunkte innerhalb solcher Blöcke miteinander korreliert sind und daher die wichtigen Transformationskoeffizienten auf wenige Stellen innerhalb jedes transformierten Blocks konzentriert werden. Statt 8*8 = 64 Bildpunkten sind dann nur einige Koeffizienten pro Block zu codieren.

EP-A-0 202 135 beschreibt ein bewegungsadaptives Verfahren zur Bilddatentransformation, in dem bei dynamischem Bildinhalt zwei 4*8-DCT Transformationen durchgeführt werden, und bei statischem Bildinhalt eine 8*8-DCT Transformation durchgeführt wird.

Übliche Fernsehstandards, z.B. PAL, SECAM, NTSC arbeiten mit Halbbildern. Wenn man nun jeweils zwei aufeinanderfolgende Halbbilder zusammenflaßt und die zu transformierenden Blöcke dann diesen Vollbildern entnimmt, sind im Fall von dynamischen Bildinhalt die Bildpunkte in diesen Blöcken, die aus den jeweiligen Halbbildern stammen, kaum mit denen aus dem jeweils anderen Halbbild korreliert. Dadurch kann eine Transformationscodierung in diesem Fall uneffektiv sein.

Erfindung

Der Erfindung liegt die Aufgabe zugrunde, auch im Fall von dynamischem Bildinhalt eine effektive Bilddaten-Transformationscodierung zu ermöglichen.

Diese Aufgabe wird durch die im Patentanspruch 1 angegebenen Merkmale gelöst. Vorteilhafte Weiterbildungen der Erfindung sind in den Unteransprüchen angegeben.

Die Transformationscodierung wird an statischen und dynamischen Bildinhalt angepaßt.

In P3642664 ist vorgeschlagen worden, eine Umschaltung zwischen einer entsprechenden 8*8-DCT und zweier entsprechender 4*8-DCT's pro Block vorzunehmen. Bei statischem Bildinhalt erfolgt eine 8*8-DCT für den jeweiligen Block, bei dynamischen Bildinhalt werden für den jeweiligen Block zwei 4*8-DCT-Tranformationen, getrennt für die Bildpunkte des jeweiligen Halbbildes, durchgeführt. Dies bedeutet aber, daß eine Vorrichtung, die dieses Verfahren benutzt, die Fähigkeit haben muß, zwei relativ aufwendig zu realisierende Transformationsarten durchzuführen.

Um diesen Aufwand zu verringern, erfolgt statt der 4*8-DCT eine spezielle Zusatz-Transformation der bereits transformierten 8*8-DCT-Koeffizienten-Blöcke. Diese Zusatztransformation besteht darin, die 8*8-DCT-Transformationskoeffizienten jedes Blocks spaltenweise mit einer entsprechenden Spezialmatrix zu multiplizieren. In einem Coder wird detektiert, ob sich die 8*8-DCT-Koeffizienten oder die mit der Spezialmatrix multiplizierten 8*8-DCT-Koeffizienten effektiver codieren lassen und daraufhin die weitere Codierung des Blocks (z.B. Wichtung, Quantisierung, Huffman-Codierung) durchgeführt.

Dabei ist die Spezialmatrix so aufgebaut, daß die Multiplikation mit dieser Matrix mit Hilfe einfacher Add- und Shift-Operationen ausgeführt werden kann.

Zeichnungen

Nachstehend wird die Erfindung anhand der Zeichnungen erläutert. Diese zeigen in

Fig. 1    einen Block von Transformationskoeffizienten,
Fig. 2    eine erste Spezialmatrix,
Fig. 3    eine zweite Spezialmatrix,
Fig. 4    einen Coder für das erfindungsgemäße Verfahren,
Fig. 5    einen Decoder für das erfindungsgemäße Verfahren.

Ausführungsbeispiele

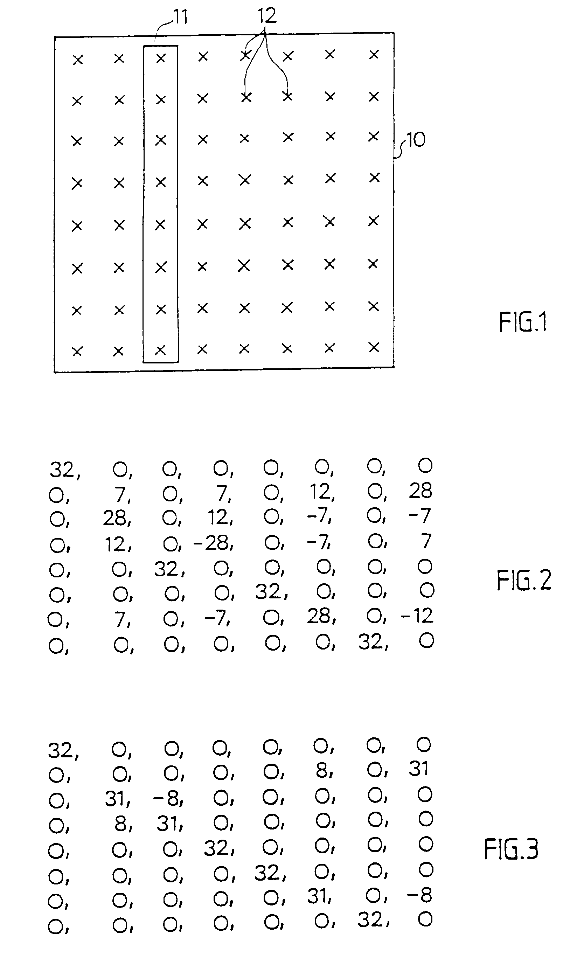

In Fig. 1 ist ein Block 10 mit acht mal acht Transformations-koeffizienten 12 dargestellt, der aus der zweidimensionalen DCT-Transformation eines entsprechenden Blocks von acht mal acht Bildpunkten hervorgegangen ist. Die acht Spalten 11 dieses Koeffizientenblocks 10 werden jeweils mit einer Spezialmatrix multipliziert, wie sie beispielsweise in Fig. 2 oder Fig. 3 dargestellt ist. Die Spezialmatrix hat relativ viele "Null"-Elemente. Von den übrigen Elementen enthalten die meisten Zweierpotenzen. Die Multiplikation der Spalten 11 mit der Spezialmatrix läßt sich daher vorteilhaft mit geringem Aufwand durch wenige Add- und Shift-Operationen bewerkstelligen.

Die Multiplikation der Spalten 11 des Koeffizientenblocks 10 mit der Spezialmatrix kann insgesamt als eine neue, für bewegten Bildinhalt angepaßte Transformationsart interpretiert werden, im folgenden Spezialtransformation genannt. Durch diese Spezialtransformation wird die zwischen den Halbbildern unterschiedliche Korrelation der Bildpunkte in den Blöcken berücksichtigt und eine effektivere Codierung mit einer daraus resultierenden geringeren Datenrate bzw. höheren Bildqualität ermöglicht.

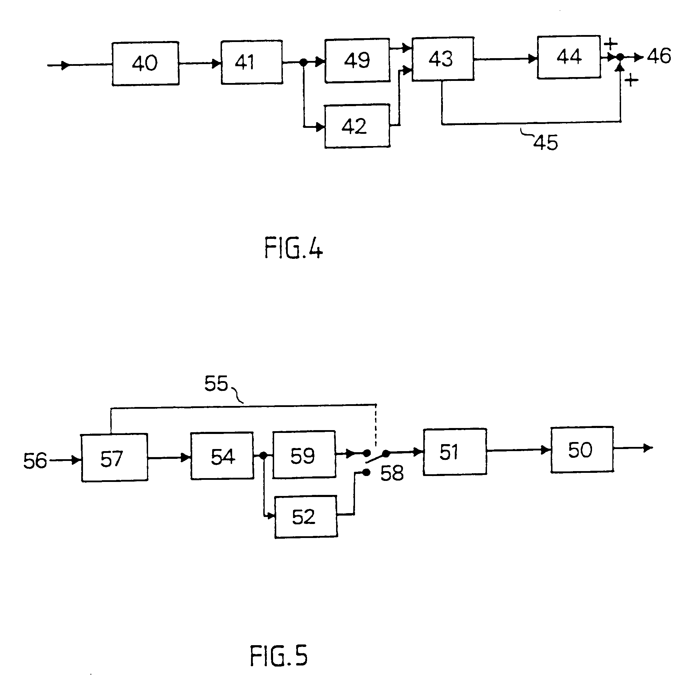

Fig. 4 zeigt einen Coder, der dieses Verfahren zur Codierung von Bildsignalen verwendet. Ein Line-to-Block-Converter 40 erhält an seinem Eingang zeilenweise digitale Bildsignale, die z.B. von einem Fernsehsender ausgestrahlt, demoduliert, in Luminanz- und Chrominanzsignale aufgespalten und A/D-gewandelt wurden. Aus diesen Signalen werden nach bekannten Verfahren Blöcke von Bildpunkten geformt und einer Schaltung zur zweidimensionalen DCT-Transformation 41 zugeführt. Diese Transformationsschaltung kann beispielsweise aus einem integrierten Schaltkreis, Typ STV 3208, Hersteller SGS-Thomson, bestehen. Die Transformations-Koeffizienten dieser Transformationsschaltung 41 werden über eine Verzögerungsschaltung 49 einem ersten Eingang eines Vergleichers 43 zugeführt. Die Koeffizienten der Transformationsschaltung 41 gelangen ebenfalls zu einer spezial-Transformationsschaltung 42, in der Spaltenformer, Addierer, Shifter und/oder Multiplizierer enthalten sind. Eine relativ aufwendige zweite DCT-Transformationsschaltung für eine 2*(4*8)- Transformation wird nicht benötigt.

Es wird in dieser Spezial-Transformationsschaltung 42 folgende Matrixmultiplikation durchgeführt:

$$[Y_n] = [T] * [X_n].$$

$[X_n]$ stellt jeweils eine Spalte 11 von DCT-Transformations-Koeffizienten 12 dar,

$$[X_n] = \begin{pmatrix} x_{1n} \\ . \\ . \\ . \\ X_{8n} \end{pmatrix},$$

wobei n jeweils von 1 bis 8 läuft.

$[T]$ ist eine Spezial-Transformationsmatrix entsprechend Fig. 2 oder Fig. 3.

$[Y_n]$ stellt jeweils eine entsprechende Spalte von Spezialtransformations-Koeffizienten dar. Die Werte der Elemente der Spalten werden anschließend, beispielsweise durch eine Shift-Operation, durch den Betrag des linken oberen Elementes der Matrix $[T]$ (in Fig. 2 und Fig. 3 der Wert 32) geteilt, um für die Ergebnis-Spalte einen der Eingangsspalte entsprechenden Wertebereich zu erhalten. Jeweils acht solcher Spalten werden wieder zu einem 8*8-Block von Spezialtransformations-Koeffizienten zusammengefaßt und auf einen zweiten Eingang des Vergleichers 43 gegeben.

Die Koeffizienten-Matrizen $[X]$ bzw. $[Y]$ an den Eingängen dieses Vergleichers 43 haben folgenden Aufbau:

$$[X] = \begin{pmatrix} X_{11} & . & . & . & X_{18} \\ . & & & & . \\ . & & & & . \\ . & & & & . \\ X_{81} & . & . & . & X_{88} \end{pmatrix}, \quad [Y] = \begin{pmatrix} Y_{11} & . & . & . & Y_{18} \\ . & & & & . \\ . & & & & . \\ . & & & & . \\ Y_{81} & . & . & . & Y_{88} \end{pmatrix},$$

wobei $X_{11}$ bzw. $Y_{11}$ das linke obere Element ist.

In Bildern mit statischem Bildinhalt sind im statistischen Mittel etwa innerhalb des Dreiecks $X_{11}...X_{18}...X_{8l}$ die wesentlichen Koeffizienten enthalten, d.h. Koeffizienten mit Beträgen, die zur Rekonstruktion der Bilder in einem entsprechenden Decoder benötigt werden.

In Bildern mit dynamischem Bildinhalt sind auch innerhalb des zusätzlichen Bereichs von Dreieck $X_{11}...X_{88}...X_{81}$ im statistischen Mittel wesentliche Koeffizienten enthalten. Dieser Effekt ist in der Spezialkoeffizienten-Matrix $[Y]$ durch die Multiplikation der Spalten der Matrix $[X]$ mit der Spezialmatrix $[T]$ verringert. Darum bildet der Vergleicher 43 z.B. die beiden Summen der Beträge der entsprechenden Koeffizienten von den Zeilen $X_{81}...X_{88}$ und $Y_{81}...Y_{88}$ der an den

beiden Eingängen anliegenden, vom gleichen Bildpunkt-Block herrührenden, Koeffizienten-Matrizen.

Diejenige der beiden Matrizen, bei der diese Summe kleiner ist, wird nachfolgend in einer bekannten Codierschaltung 44 codiert.

Es kann auch im Vergleicher 43 z.B. nur die Summe der Beträge der Matrixelemente $X_{81}$, $X_{82}$ und $X_{83}$ bzw. $Y_{81}$, $Y_{82}$ und $Y_{83}$ gebildet werden, um diese Entscheidung herbeizuführen. Die Codierschaltung 44 enthält beispielsweise eine Wichtungsschaltung, einen Scanner, einen Quantisierer und einen Huffman-Codierer.

Die im Vergleicher 43 gewonnene Information über die Wahl der Transformationsart wird über eine Leitung 45 dem Ausgangssignal der Codierschaltung 44 hinzugefügt und bildet zusammen mit diesem Ausgangssignal und beispielsweise einem Tonsignal und einer Kanal-Codierung das zu einem Empfänger übertragene oder gespeicherte Gesamtsignal 46.

Der Decoder in Fig. 5 erhält an seinem Eingang dieses Gesamtsignal 56. In einer Transformationsart-Decodierungsschaltung 57 wird die Information über die bei der Decodierung zu verwendende Transformationsart wiedergewonnen und über eine Leitung 55 einem Umschalter 58 zugeführt.

In einer bekannten Decoderschaltung 54 wird entsprechend der Signalverarbeitung in der Coderschaltung 44 eine inverse Signalverarbeitung durchgeführt. Die Decoderschaltung 54 enthält entsprechend einen Huffman-Decodierer, einen De-scanner und eine Schaltung für eine inverse Wichtung.

Das Ausgangssignal der Decoderschaltung 54 gelangt über eine Verzögerungsschaltung 59 zum ersten Eingang eines Umschalters 58 und zu einer Schaltung für eine entsprechende inverse Spezialtransformation 52, deren Ausgang mit einem zweiten Eingang des Umschalters 58 verbunden ist.

In Abhängigkeit von dem Signal auf Leitung 55 wird demnach bei statischem Bildinhalt im wesentlichen das Ausgangssignal der Decoderschaltung 54 unverändert zum Eingang der Schaltung zur inversen zweidimensionalen DCT-Transformation 51 geführt und bei dynamischem Bildinhalt im wesentlichen das zusätzlich invers spezialtransformierte Ausgangssignal der Decoderschaltung 54.

In der Schaltung zur inversen Spezialtransformation 52 werden wie im Coder (Fig. 4) zunächst Spalten von Koeffizienten aus dem jeweiligen Koeffizienten-Block entnommen und diese Spalten werden mit einer Spezialmatrix, entsprechend Fig. 2 oder Fig. 3, die transponiert wurde, multipliziert nach folgender Formel:

$$[Y_n] = [T^T] * [X_n]$$

$[X_n]$ stellt jeweils eine Spalte 11 von spezialtransformierten Koeffizienten 12 dar,

$$[X_n] = \begin{pmatrix} X_{1n} \\ . \\ . \\ . \\ X_{8n} \end{pmatrix} ,$$

wobei n jeweils von 1 bis 8 läuft.

$[T^T]$ ist die transponierte Spezialtransformations-Matrix $[T]$. $[Y_n]$ stellt jeweils eine entsprechende Spalte eines zweidimensional transformierten DCT-Koeffizienten-Blocks dar. Diese Blöcke werden wie im Coder elementweise durch den Betrag des linken oberen Elementes der Matrix $[T^T]$ dividiert und in Schaltung 51 invers DCT-transformiert. Die Schaltung zur inversen DCT-Transformation 51 kann ebenfalls aus dem integrierten Schaltkreis, Typ STV 3208, Hersteller SGS-Thomson, bestehen. Am Ausgang von dieser Schaltung zur inversen DCT-Transformation 51 stehen im wesentlichen die ursprünglichen Bildpunkt-Blöcke wieder zur Verfügung.

Diese Blöcke von Bildpunkten werden in einem Block-to-Line-Konverter 50 in zeilenserielle, digitale Bildsignale umgewandelt, die anschließend noch D/A-gewandelt und in ein FBAS-Signal umgeformt werden können.

Für Luminanz- und Chrominanzsignale können parallele Coder (Fig. 4) und Decoder (Fig. 5) angeordnet werden. Dabei kann die Entscheidung des Vergleichers 43 getrennt für Luminanzund Chrominanz getroffen und übertragen werden. Es kann aber auch nur ein Vergleicher für die Luminanz angeordnet sein, dessen Entscheidung für die Chrominanz-Signalverarbeitung mitbenutzt wird.

Der bzw. die Vergleicher 43 können für jeden Block getrennt entscheiden oder jeweils für eine Gruppe von Blöcken, z.B. ein Vollbild, eine Entscheidung durchführen.

Statt einer Blockgröße von acht 8*8 können auch andere Blockgrößen, z.B. 16*16 oder 4*4 verwendet werden, wobei sich die zugehörigen Zahlenangaben in der Beschreibung entsprechend ändern.

**Patentansprüche**

1. Verfahren zur Bilddaten-Transformation, wobei Bilddaten bei einer Codierung blockweise mit einer Transformation zweidimensional in Blöcke (10) von Koeffizienten (12) transformiert und bei einer entsprechenden Decodierung Blöcke (10) von Koeffizienten (12) zweidimensional in Blöcke von Bilddaten rücktransformiert werden, **dadurch gekennzeichnet**, daß bei der Codierung:

   - die Blöcke (10) von Koeffizienten (12) spaltenweise (11) zusätzlich mit einer vorgegebenen Spezialmatrix multipliziert werden, die überwiegend Null-Elemente hat und bei bewegtem Bildinhalt näherungsweise eine statischem Bildinhalt entsprechende Koeffizientenverteilung mit entsprechend modifizierten Koeffizienten generiert;
   - jeweils für einen in Koeffizienten transformierten Block eine erste Summe und für den in Koeffizienten transformierten und mit der Spezialmatrix multiplizierten Block eine zweite Summe von Beträgen von Koeffizienten aus mindestens der unteren Zeile ($X_{81...88}$, $Y_{81...88}$) der beiden Matrizen gebildet und verglichen (43) wird;
   - jeweils die Matrix mit der kleineren Summe zur Codierung (44) verwendet wird,
   und daß bei der Decodierung im Fall von modifizierten Koeffizienten diese vor der Rücktransformation mit der transponierten Spezialmatrix multipliziert (52) werden.

2. Verfahren nach Anspruch 1, **dadurch gekennzeichnet**, daß die Spezialmatrix eine der folgenden Formen hat:

```
32,   0,   0,   0,   0,   0,   0,   0
 0,   7,   0,   7,   0,  12,   0,  28
 0,  28,   0,  12,   0,  -7,   0,  -7
 0,  12,   0, -28,   0,  -7,   0,   7
 0,   0,  32,   0,   0,   0,   0,   0
 0,   0,   0,   0,  32,   0,   0,   0
 0,   7,   0,  -7,   0,  28,   0, -12
 0,   0,   0,   0,   0,   0,  32,   0
```

oder

```
32,   0,   0,   0,   0,   0,   0,   0
 0,   0,   0,   0,   0,   8,   0,  31
 0,  31,  -8,   0,   0,   0,   0,   0
 0,   8,  31,   0,   0,   0,   0,   0
 0,   0,   0,  32,   0,   0,   0,   0
 0,   0,   0,   0,  32,   0,   0,   0
 0,   0,   0,   0,   0,  31,   0,  -8
 0,   0,   0,   0,   0,   0,  32,   0.
```

3. Verfahren nach Anspruch 1 oder 2, **dadurch gekennzeichnet**, daß die Transformation eine DCT-Transformation und die Rücktransformation eine inverse DCT-Transformation ist.

4. Verfahren nach einem oder mehreren der Ansprüche 1 bis 3, **dadurch gekennzeichnet**, daß ein das Ergebnis des Vergleichs (44) repräsentierendes Signal (45) mitübertragen und bei der Decodierung ausgewertet (55) wird.

5. Verfahren nach einem oder mehreren der Ansprüche 1 bis 4, **dadurch gekennzeichnet**, daß die erste und die zweite Summe nur aus Elementen der letzten Zeile der Blöcke (10) gebildet werden.

6. Vorrichtung, die zur Codierung ein Verfahren nach einem oder mehreren der Ansprüche 1 bis 5 benutzt, die versehen ist mit einem Line-to-Block-Konverter (40), mit einer nachfolgenden Schaltung zur zweidimensionalen Transformation (41), der eine Verzögerungsschaltung (49) und eine spezialtransformationsschaltung (42) - die Blöcke (10) von Koeffizienten (12) spaltenweise (11) zusätzlich mit einer vorgegebenen Spezialmatrix multipliziert, die überwiegend Null-Elemente hat und bei bewegtem Bildinhalt näherungsweise eine statischem Bildinhalt entsprechende Koeffizientenverteilung mit entsprechend modifizierten Koeffizienten generiert - nachgeschaltet sind, derer beider Ausgangssignale einem Vergleicher (43) zugeführt werden, der jeweils für einen in Koeffizienten transformierten Block eine erste Summe und für den in Koeffizienten transformierten und mit der Spezialmatrix multiplizierten Block eine zweite Summe von Beträgen von Koeffizienten aus mindestens der unteren Zeile ($X_{81...88}$, $Y_{81...88}$) der beiden Matrizen bildet und jeweils die Matrix mit der kleineren Summe einer nachfolgenden Coderschaltung (44) zuführt und das Vergleichs-Ergebnissignal über die jeweils ausgewählte der beiden Transformations-Arten erzeugt und dem Ausgangssignal der Coderschaltung (44) hinzufügt.

7. Vorrichtung, die zur Decodierung ein Verfahren nach einem oder mehreren der Ansprüche 1 bis 5 benutzt, die versehen ist mit einer Transformationsart-Decodierungsschaltung (57), die das Vergleichs-Eirgebnissignal abtrennt und damit einen Umschalter (58) ansteuert, mit einer nachgeschalteten Decoderschaltung (54), der eine Schaltung zur inversen Spezialtransformation (52) mittels einer transponierten Spezialmatrix und eine Verzögerungsschaltung (59) nachgeschaltet sind, derer beiden Ausgangssignale den Eingängen des Umschalters (58) zugeführt werden, mit einer nachfolgenden Schaltung zur inversen zweidimensionalen Transformation (51), deren Ausgangssignal einem Block-to-Line-Konverter (50) zugeführt wird, wobei die Spezialmatrix überwiegend Null-Elemente hat und für eine entsprechende Codierung bei bewegtem Bildinhalt näherungsweise eine statischem Bildinhalt entsprechende Koeffizientenverteilung mit entsprechend modifizierten Koeffizienten generiert.

## Claims

1. A process for the transformation of image data, image data being transformed two-dimensionally into blocks (10) of coefficients (12) by means of a transformation block by block during a coding and blocks (10) of coefficients (12) being transformed back two-dimensionally into blocks of image data during a corresponding decoding, characterised in that, during the coding:

   - the blocks (10) of coefficients (12) are additionally multiplied column-by-column (11) by a predetermined special matrix which has mainly zero elements and, in the case of a moving image content, approximately generates a coefficient distribution corresponding to a static image content, with correspondingly modified coefficients;
   - a first sum is in each case formed for a block transformed into coefficients and a second sum of amounts of coefficients from at least the bottom row ($X_{81...88}$, $Y_{81...88}$) of the two matrices are formed for the block transformed into coefficients and multiplied by the special matrix, and is compared (43);
   - the matrix with the smaller sum is in each case used for the coding (44), and in that, during the decoding, in the case of modified coefficients, these are multiplied (52) by the transposed special matrix before the inverse transformation.

2. Process according to Claim 1, characterised in that the special matrix has one of the following forms:

| 32, | 0, | 0, | 0, | 0, | 0, | 0, | 0 |
|---|---|---|---|---|---|---|---|
| 0, | 7, | 0, | 7, | 0, | 12, | 0, | 28 |
| 0, | 28, | 0, | 12, | 0, | −7, | 0, | −7 |
| 0, | 12, | 0, | −28, | 0, | −7, | 0, | 7 |
| 0, | 0, | 32, | 0, | 0, | 0, | 0, | 0 |
| 0, | 0, | 0, | 0, | 32, | 0, | 0, | 0 |
| 0, | 7, | 0, | −7, | 0, | 28, | 0, | −12 |
| 0, | 0, | 0, | 0, | 0, | 0, | 32, | 0 |

or

$$\begin{array}{rrrrrrrr}
32, & 0, & 0, & 0, & 0, & 0, & 0, & 0 \\
0, & 0, & 0, & 0, & 0, & 8, & 0, & 31 \\
0, & 31, & -8, & 0, & 0, & 0, & 0, & 0 \\
0, & 8, & 31, & 0, & 0, & 0, & 0, & 0 \\
0, & 0, & 0, & 32, & 0, & 0, & 0, & 0 \\
0, & 0, & 0, & 0, & 32, & 0, & 0, & 0 \\
0, & 0, & 0, & 0, & 0, & 31, & 0, & -8 \\
0, & 0, & 0, & 0, & 0, & 0, & 32, & 0.
\end{array}$$

3. Process according to Claim 1 or 2, characterised in that the transformation is a DCT transformation and the inverse transformation is an inverse DCT transformation.

4. Process according to one or a number of Claims 1 to 3, characterised in that a signal (45) representing the result of the comparison (44) is also transmitted and evaluated (55) during the decoding.

5. Method according to one or a number of Claims 1 to 4, characterised in that the first and the second sum are only formed from elements of the last row of blocks (10).

6. A device which uses a process according to one or a number of Claims 1 to 5 for the coding, which is provided with a line-to-block converter (40), with a subsequent circuit for the two-dimensional transformation (41), which is followed by a delay circuit (49) and a special-transformation circuit (42)

   - which additionally multiplies blocks (10) of coefficients (12) column by column (11) by a predetermined special matrix which mainly has zero elements and, in the case of moving image content, approximately generates a coefficient distribution corresponding to the static image content, with correspondingly modified coefficients - the two output signals of which circuits are supplied to a comparator (43) which in each case forms a first sum for a block transformed into coefficients and a second sum of amounts of coefficients from at least the bottom row $(X_{81\ldots88}, Y_{81\ldots88})$ of the two matrices for the block transformed into coefficients and multiplied by the special matrix and in each case supplies the matrix with the smaller sum to a subsequent coding circuit (44) and generates the comparison result signal on the in each case selected type of the two types of transformation and adds it to the output signal of the coding circuit (44).

7. A device which uses a process according to one or a number of Claims 1 to 5 for the decoding, which is provided with a transformation type decoding circuit (57) which separates the comparison result signal and uses it for activating a change-over switch (58), comprising a subsequent decoding circuit (54) which is followed by a circuit for the inverse special transformation (52) by means of a transposed special matrix and by a delay circuit (59), the two output signals of which circuits are supplied to the inputs of the change-over switch (58), with a subsequent circuit for the inverse two-dimensional transformation (51), the output signal of which is supplied to a block-to-line converter (50), the special matrix having mainly zero elements and approximately generating a coefficient distribution corresponding to a static image content, with correspondingly modified coefficients, for a corresponding coding in the case of a moving image content.

**Revendications**

1. Procédé pour la transformation de données d'image où, lors du codage, les données d'image sont soumises bloc par bloc à une transformation bidimensionnelle pour obtenir des blocs (10) de coefficients, et où, lors du décodage correspondant, les blocs (10) de coefficients (12) sont soumis à une transformation inverse pour obtenir à nouveau des blocs de données d'image, **procédé caractérisé en ce** que, lors du codage,

   - les blocs (10) de coefficients (12) sont en outre multipliés colonne par colonne (11) par une matrice spéciale donnée comportant essentiellement des éléments zéro, et qui, en présence d'une image de contenu dynamique, génère une distribution de coefficients correspondant approximativement à une image de contenu statique et dont les coefficients sont modifiés en conséquence ;

- un premier total est fait pour un bloc transformé en coefficients et un deuxième total est fait pour un bloc transformé en coefficients et multiplié par la matrice spéciale, et ce à l'aide des montants des coefficients de chacune des lignes inférieures ($X_{81}...X_{88}$, $Y_{81}...Y_{88}$), au moins, des deux matrices, les deux totaux étant alors comparés (43) ;
- la matrice dont le total est le moins élevé, est utilisée pour le codage (44),
  **procédé caractérisé en outre en ce** que, lors du décodage, les coefficients modifiés sont multipliés avec la matrice spéciale transposée avant d'être soumis à la transformation inverse (52).

2. Procédé selon la revendication 1 **caractérisé en ce** que ladite matrice spéciale possède l'une des structures suivantes :

$$
\begin{array}{rrrrrrrr}
32, & 0, & 0, & 0, & 0, & 0, & 0, & 0 \\
0, & 7, & 0, & 7, & 0, & 12, & 0, & 28 \\
0, & 28, & 0, & 12, & 0, & -7, & 0, & -7 \\
0, & 12, & 0, & -28, & 0, & -7, & 0, & 7 \\
0, & 0, & 32, & 0, & 0, & 0, & 0, & 0 \\
0, & 0, & 0, & 0, & 32, & 0, & 0, & 0 \\
0, & 7, & 0, & -7, & 0, & 28, & 0, & -12 \\
0, & 0, & 0, & 0, & 0, & 0, & 32, & 0
\end{array}
$$

ou

$$
\begin{array}{rrrrrrrr}
32, & 0, & 0, & 0, & 0, & 0, & 0, & 0 \\
0, & 0, & 0, & 0, & 0, & 8, & 0, & 31 \\
0, & 31, & -8, & 0, & 0, & 0, & 0, & 0 \\
0, & 8, & 31, & 0, & 0, & 0, & 0, & 0 \\
\\
\\
0, & 0, & 0, & 32, & 0, & 0, & 0, & 0 \\
0, & 0, & 0, & 0, & 32, & 0, & 0, & 0 \\
0, & 0, & 0, & 0, & 0, & 31, & 0, & -8 \\
0, & 0, & 0, & 0, & 0, & 0, & 32, & 0.
\end{array}
$$

3. Procédé selon l'une quelconque des revendications 1 ou 2 **caractérisé en ce** que la transformation est une DCT et la retransformation une DCT inverse.

4. Procédé selon l'une quelconque ou plusieurs des revendications 1 à 3 **caractérisé en ce** qu'un signal (45) représentant le résultat de la comparaison (44) est transmis simultanément et analysé au moment du décodage (55).

5. Procédé selon l'une quelconque des revendications 1 à 4 **caractérisé en ce** que le premier et le deuxième total sont uniquement formés à l'aide des éléments de la dernière ligne des blocs (10).

6. Dispositif utilisant pour le codage un procédé selon l'une quelconque des revendications 1 à 5, et qui comporte un convertisseur ligne-bloc (line-to-block-converter) (40) avec, en aval un circuit de transformation bidimensionnelle (41) qui est suivi d'un circuit de retard (49) et d'un circuit de transformation spéciale (42) - ce dernier multipliant en plus les blocs (10) de coefficients (12) colonne par colonne (11) par une matrice spéciale donnée qui se compose, pour l'essentiel, d'éléments zéro et qui, en présence d'un contenu d'image dynamique, génère une distribution de coefficients approximativement équivalente à celle d'une image de contenu statique, avec des coefficients modifiés en conséquence -, dont les deux signaux de sortie sont transmis vers un comparateur (43) qui forme, à partir de la dernière ligne ($X_{81...88}$, $Y_{81...88}$) au moins des deux matrices un premier total de montants de coefficients pour le bloc transformé en coefficients et un deuxième total de montants de coefficients pour le bloc transformé en coefficients et multiplié par la matrice spéciale, la matrice avec le total le moins élevé étant ensuite amenée sur un circuit de codage (44) pour générer le signal du résultat de comparaison représentant celui des deux modes de transformation qui a été retenu, puis pour associer ledit signal au signal de sortie du circuit de codage (44).

7. Dispositif utilisant pour le décodage un procédé selon l'une quelconque ou plusieurs des revendications 1 à 5, et qui comporte un circuit de décodage du mode de transformation (57), lequel prélève le signal du résultat de comparaison pour commander un commutateur (58) avec, en aval, un circuit de décodage (54) qui est suivi d'un circuit de transformation spéciale inverse (52) au moyen d'une matrice spéciale transposée, et d'un circuit de retard (59) dont les deux signaux de sortie sont appliqués aux entrées dudit commutateur (58), comportant en outre un circuit de transformation bidimensionnelle inverse (51) monté en aval et dont le signal de sortie est amené sur un convertisseur bloc-ligne (block-to-line converter) (50), sachant que la matrice spéciale comporte, pour l'essentiel, des éléments zéro et génère, en présence d'un contenu d'image dynamique, une distribution de coefficients approximativement équivalente à celle d'une image de contenu statique, avec des coefficients modifiés en conséquence.

FIG.1

```
32,    O,    O,    O,    O,    O,    O,    O
O,    7,    O,    7,    O,    12,   O,    28
O,    28,   O,    12,   O,   -7,   O,   -7
O,    12,   O,  -28,    O,   -7,   O,    7
O,    O,    32,   O,    O,    O,    O,    O
O,    O,    O,    O,    32,   O,    O,    O
O,    7,    O,   -7,    O,    28,   O,  -12
O,    O,    O,    O,    O,    O,    32,   O
```

FIG.2

```
32,    O,    O,    O,    O,    O,    O,    O
O,    O,    O,    O,    O,    8,    O,    31
O,    31,  -8,    O,    O,    O,    O,    O
O,    8,    31,   O,    O,    O,    O,    O
O,    O,    O,    32,   O,    O,    O,    O
O,    O,    O,    O,    32,   O,    O,    O
O,    O,    O,    O,    O,    31,   O,   -8
O,    O,    O,    O,    O,    O,    32,   O
```

FIG.3

FIG.4

FIG.5